# EUROPEAN PATENT APPLICATION

(11) **EP 4 436 255 A1**
(43) Date of publication of application: **25.09.2024**
(21) Application number: 22911843.5
(22) Date of filing: 20.12.2022
(51) Int. Cl.: H04W 36/00, H04W 36/14

(54) **METHOD AND DEVICE FOR OPTIMIZING VOICE FALLBACK IN NEXT-GENERATION MOBILE COMMUNICATION**

(30) Priority: 20.12.2021 KR 20210182911
(71) Applicant: Samsung Electronics Co., Ltd., Suwon-si, Gyeonggi-do 16677 (KR)
(72) Inventor: KIM, Sangbum, Suwon-si, Gyeonggi-do 16677 (KR)
(74) Representative: Gulde & Partner
(86) International application number: PCT/KR2022/020807
(87) International publication number: WO 2023/121210

(57) **Abstract**

A method performed by a terminal in a wireless communication system is provided. The method comprises the steps of: receiving a message for a command of handover from a cell of a first radio access technology (RAT) to a target cell of a second RAT, the message including voicefallbackindication; performing handover from the cell of the first RAT to the target cell of the second RAT on the basis of the message; and determining report content for a radio link failure if establishment of a connection to the target cell is not successful, wherein the report content for a radio link failure can include information indicating that the handover failure is associated with voice fallback.

## Description

### [Technical Field]

This disclosure relates to a method and device for optimizing voice fallback in a next-generation mobile communication.

### [Background Art]

5th generation (5G) mobile communication technologies define broad frequency bands such that high transmission rates and new services are possible, and can be implemented not only in "Sub 6 gigahertz (GHz)" bands such as 3.5 GHz, but also in "Above 6 GHz" bands referred to as millimeter wave (mmWave) including 28 GHz and 39 GHz. In addition, it has been considered to implement 6th generation (6G) mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting various numerologies (for example, operating a plurality of subcarrier spacings, etc.) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, new radio (NR) user equipment (UE) power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step random access channel (RACH) for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large scale antennas, metamaterial-based lenses and antennas for improving coverage of terahertz band signals, high-dimensional space multiplexing technology using orbital angular momentum (OAM), and reconfigurable intelligent surface (RIS), but also full duplex technology for increasing frequency efficiency of 6G mobile communication technologies and improving system networks, AI-based communication technology for implementing system optimization by utilizing satellites and artificial intelligence (AI) from the design stage and internalizing end-to-end AI support functions, and next-generation distributed computing technology for implementing services at levels of complexity exceeding the limit of terminal operation capability by utilizing ultrahigh-performance communication and computing resources.

### [Disclosure]

### [Technical Problem]

The disclosure provides a method for a terminal to record and report voice fallback-related information in an inter-radio access technology (RAT) handover or Re-direction situation in a wireless communication system.

The technical objects to be achieved by the disclosure are not limited to the technical objects mentioned above, and other technical objects not mentioned may be clearly understood by those skilled in the art from the following descriptions.

### [Technical Solution]

A method performed by a terminal in a wireless communication system according to an embodiment of the disclosure may comprise receiving a message for a command of handover from a cell of a first radio access technology (RAT) to a target cell of a second RAT, the message including voice fallback indication (voicefallbackindication), performing handover from the cell of the first RAT to the target cell of the second RAT on the basis of the message, and determining report content for a radio link failure in case that establishment of a connection to the target cell is not successful, wherein the report content for the radio link failure may include information indicating that the handover failure is associated with voice fallback.

In addition, a method performed by a base station of a first radio access technology (RAT) in a wireless communication system according to an embodiment of the disclosure may comprise transmitting, to a terminal, a message for a command of handover from a cell of the first RAT to a target cell of a second RAT, handover being performed from the cell of the first RAT to the target cell of the second RAT on the basis of the message, and receiving report content for a radio link failure from a third cell in case that the handover fails, wherein the message may include voice fallback indication (voicefallbackindication), and the report content for the radio link failure may include information indicating that the handover failure is associated with voice fallback.

In addition, a terminal in a wireless communication system according to an embodiment of the disclosure may comprise a transceiver, and a processor functionally connected to the transceiver, wherein the processor may be configured to receive a message for a command of handover from a cell of a first radio access technology (RAT) to a target cell of a second RAT, perform handover from the cell of the first RAT to the target cell of the second RAT on the basis of the message, and determine report content for a radio link failure in case that establishment of a connection to the target cell is not successful, wherein the message may include voice fallback indication (voicefallbackindication), and the report content for the radio link failure may include information indicating that the handover failure is associated with voice fallback.

In addition, a base station in a wireless communication system according to an embodiment of the disclosure may comprise a transceiver, and a processor functionally connected to the transceiver, wherein the processor may be configured to transmit, to a terminal, a message for a command of handover from a cell of a first radio access technology (RAT) corresponding to the base station to a target cell of a second RAT, handover being performed from the cell of the first RAT to the target cell of the second RAT on the basis of the message, and receive report content for a radio link failure from a third cell in case that the handover fails, wherein the message may include voice fallback indication (voicefallbackindication), and the report content for the radio link failure may include information indicating that the handover failure is associated with voice fallback.

### [Advantageous Effects]

According to an embodiment of the disclosure, when inter-RAT handover or Re-direction is performed in a wireless communication system, the terminal may record and report voice fallback-related information.

The effects that can be obtained from the disclosure are not limited to the effects mentioned above, and other effects not mentioned will be clearly understood by those skilled in the art from the description below.

### [Description of Drawings]

FIG. 1 is a diagram illustrating a structure of a next-generation mobile communication system according to an embodiment of the disclosure.
FIG. 2 is a diagram for explaining a procedure for indicating voice fallback according to an embodiment of the disclosure.
FIG. 3 is a diagram illustrating an operation of recording voice fallback-related information in inter-RAT handover according to an embodiment of the disclosure.
FIG. 4 is a flowchart of a process for reporting voice fallback-related information using an RLF report in inter-RAT handover according to an embodiment of the disclosure.
FIG. 5 is a flowchart of an operation of a UE reporting voice fallback-related information using an RLF report in inter-RAT handover according to an embodiment of the disclosure.
FIG. 6 is a flowchart of a process for reporting voice fallback-related information using a CEF report in inter-RAT handover according to an embodiment of the disclosure.
FIG. 7 is a flowchart of an operation of a UE reporting voice fallback-related information using a CEF report in inter-RAT handover according to an embodiment of the disclosure.
FIG. 8 is a flowchart of a process for reporting voice fallback-related information using a CEF report in inter-RAT Re-direction according to an embodiment of the disclosure.
FIG. 9 is a flowchart of an operation of a UE reporting voice fallback-related information using a CEF report in inter-RAT Re-direction according to an embodiment of the disclosure.
FIG. 10 is a flowchart of a process for reporting voice fallback-related information using a successful HO report in inter-RAT handover according to an embodiment of the disclosure.
FIG. 11 is a flowchart of an operation of a UE reporting voice fallback-related information using a successful HO report in inter-RAT handover according to an embodiment of the disclosure.
FIG. 12 is a flowchart of a process for reporting voice fallback-related information using a Logged MDT report in inter-RAT handover according to an embodiment of the disclosure.
FIG. 13 is a flowchart of an operation of a UE reporting voice fallback-related information using a Logged MDT report in inter-RAT handover according to an embodiment of the disclosure.
FIG. 14 is a block diagram illustrating an internal structure of a UE according to an embodiment of the disclosure.
FIG. 15 is a block diagram illustrating a structure of a base station according to an embodiment of the disclosure.

### [Mode for Disclosure]

Advantages and features of the disclosure and methods of accomplishing the same may be understood more readily by with reference to the following detailed description of the embodiments of the disclosure and the accompanying drawings. The disclosure may, however, be embodied in many different forms and should not be construed as limited to embodiments set forth herein, rather these embodiments are provided so that this disclosure will be thorough and complete, and will fully convey the scope of the disclosure only defined by the claims to one of ordinary skill in the art. The same reference numerals refer to the same elements throughout the disclosure. Terms to be described below should be defined in consideration of functions of the disclosure but may be variable depending on the intention of users or operators, practices, or the like. Therefore, the terms should be defined based on the whole context of the disclosure.

Hereinafter, a base station refers to an entity for allocating resources to a terminal and may be at least one of a gNode B, an eNode B, a node B, a base station (BS), a radio access unit, a base station controller, and a node over a network. A terminal may include a user equipment (UE), a mobile station (MS), a cellular phone, a smartphone, a computer, or a multimedia system capable of performing a communication function. In the disclosure, a downlink (DL) is a wireless transmission path through which a base station transmits a signal to a terminal, and an uplink (UL) is a wireless transmission path through which a terminal transmits a signal to a base station.

In this case, it will be understood that each block of process flowcharts and combinations of the flowcharts may be performed by computer program instructions. Because these computer program instructions may be embedded in a processor of a general-purpose computer, a special-purpose computer, or other programmable data processing apparatuses, the instructions executed through the processor of the computer or other programmable data processing apparatus generates means for performing the functions described in the flowchart block(s). Because these computer program instructions may also be stored in a computer-executable or computer-readable memory that may direct the computer or other programmable data processing apparatus so as to implement functions in a particular manner, the instructions stored in the computer-executable or computer-readable memory are also capable of producing an article of manufacture containing instruction modules for performing the functions described in the flowchart block(s). Because the computer program instructions may also be embedded into the computer or other programmable data processing apparatus, the instructions for executing the computer or other programmable data processing apparatuses by generating a computer-implemented process by performing a series of operations on the computer or other programmable data processing apparatuses may provide operations for executing the functions described in the flowchart block(s).

Also, each block may represent part of a module, segment, or code that includes one or more executable instructions for executing a specified logical function(s). It should also be noted that, in some alternative implementations, the functions described in the blocks may occur out of the order noted in the drawings. For example, two blocks illustrated in succession may in fact be executed substantially concurrently, or the blocks may sometimes be executed in a reverse order, depending on the corresponding functions involved therein.

In this case, as used herein, the "unit" refers to a software element or a hardware element, such as field programmable gate array (FPGA) or application specific integrated circuit (ASIC), which performs a predetermined function. However, the "unit" does not always have a meaning limited to software or hardware. The "unit" may be constructed either to be stored in an addressable storage medium or to execute one or more processors. Thus, a "unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "units" may be combined into fewer components and "units" or may be further separated into additional components and "units". Further, the components and "units" may be implemented to operate one or more CPUs in a device or a secure multimedia card. In addition, in an embodiment, "units" may include one or more processors.

In the following description of the disclosure, in case that a detailed description of a related known function or constitution is determined to unnecessarily obscure the gist of the disclosure, the detailed description will be omitted. Hereinafter, embodiments of the disclosure will be described with reference to the attached drawings.

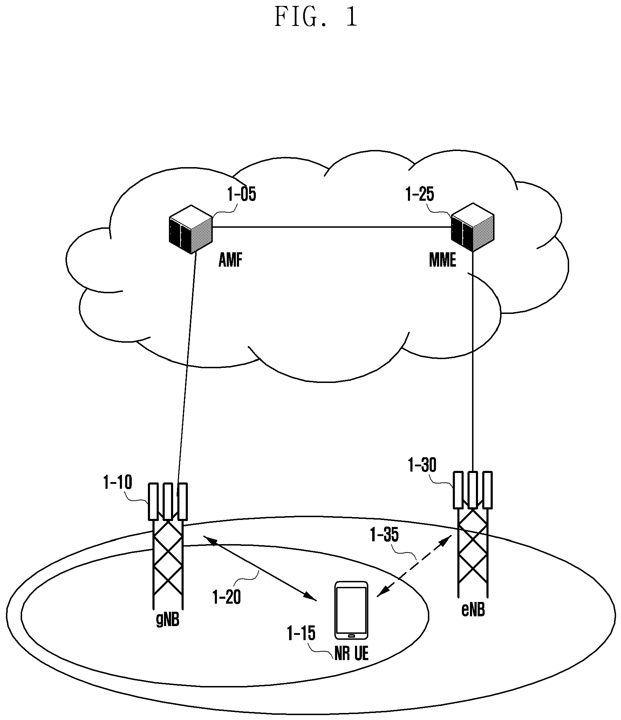

FIG. 1 illustrates a structure of a next-generation mobile communication system according to an embodiment of the present disclosure.

With reference to FIG. 1, a radio access network of a next-generation communication system (new radio (NR)) includes a next-generation base station (new radio Node B, hereinafter, a gNB) 1-10 and an access and mobility management function (AMF) (new radio core network) 1-05. A user equipment (new radio user equipment, hereinafter, NR UE or UE) 1-15 accesses an external network through the gNB 1-10 and the AMF 1-05.

In FIG. 1, the gNB may correspond to an evolved node B (eNB) of an existing LTE system. The gNB may be connected to the NR UE over a radio channel and may provide a more advanced service than that of the existing Node B (1-20). In the next-generation mobile communication system, all user traffic is served through a shared channel, requiring a device that collects state information, such as UEs' buffer status, available transmission power state, and channel state, and performs scheduling, in which the gNB 1-10 is responsible for these functions. One gNB may generally control a plurality of cells. In order to realize ultra highspeed data transmission compared to an LTE system, the next-generation mobile communication system may have a maximum bandwidth greater than the existing maximum bandwidth and may employ a beamforming technique in addition to orthogonal frequency division multiplexing (hereinafter referred to as OFDM) as a radio access technology. Also, an adaptive modulation & coding (hereinafter referred to as AMC) scheme in which a modulation scheme and a channel coding rate are determined based on a channel state of a UE is applied. The AMF 1-05 may perform functions such as mobility support, bearer configuration, quality of service (QoS) configuration, etc. The AMF is a device in charge of various control functions as well as a mobility management function for the UE, and is connected with the plurality of base stations. The next-generation mobile communication system may also interwork with the existing LTE system, in which the AMF may be connected to a mobility management entity (MME) 1-25 through a network interface. The MME is connected with an eNB 1-30 that is an existing base station. The UE supporting LTE-NR dual connectivity may transmit and receive data, while maintaining connection with the eNB as well as the gNB (1-35).

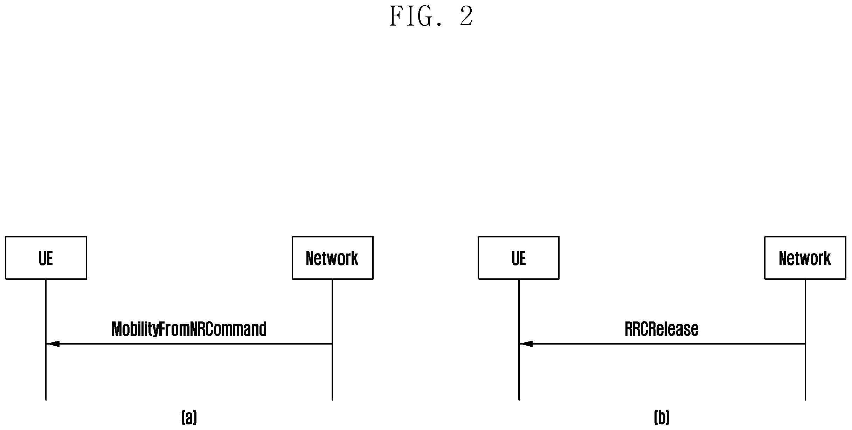

FIG. 2 is a diagram for explaining a procedure for indicating voice fallback according to an embodiment of the disclosure.

In the disclosure, voice fallback refers to evolved packet system (EPS) fallback that connects a UE to an LTE base station (e.g., eNB) that supports IP multimedia subsystem (IMS) voice service in order to provide the IMS voice service to the UE connected to an NR base station (e.g., gNB). When a higher network indicates an NR base station that the EPS fallback is necessary for one UE, the NR base station may trigger an inter-radio access technology (RAT) Handover or Re-direction to enable the UE to be connected to the LTE base station. In the inter-RAT handover (HO) or Re-direction operation, the NR base station may indicate that the operation is for voice fallback, enabling the UE to satisfy corresponding requirements or make necessary preparations.

Specifically, the NR base station may transmit a message (e.g., MobilityFromNRCommand message) including configuration information for inter-RAT HO to the UE (FIG. 2(A)). For example, the MobilityFromNRCommand message may include an indicator (e.g., voiceFallbackIndication) indicating voice fallback. For Re-direction, the NR base station may transmit a message (e.g., RRCRelease message) including configuration information for Re-direction to the UE (FIG. 2(B)). For example, the RRCRelease message may include an indicator (e.g., voiceFallbackIndication) indicating voice fallback.

Hereinafter, an example of inter-RAT HO or Re-direction operation from the NR base station to the LTE base station for voice fallback will be mainly described. However, the scope of the disclosure is not limited thereto, and embodiments of the disclosure may be applied to other communication systems with similar technical background or channel types. For example, mobile communication technologies developed after 5G may be included therein. Therefore, it may also be applied to the inter-RAT HO or Re-direction operation from higher-generation communication systems (e.g., communication systems after 5G (NR) (e.g., 6G, etc.)) to lower-generation communication systems (e.g., LTE, LTE-A, etc.) In addition, the disclosure may be applied to other communication systems through some modifications without significantly departing from the scope of the disclosure at the discretion of those skilled in the art.

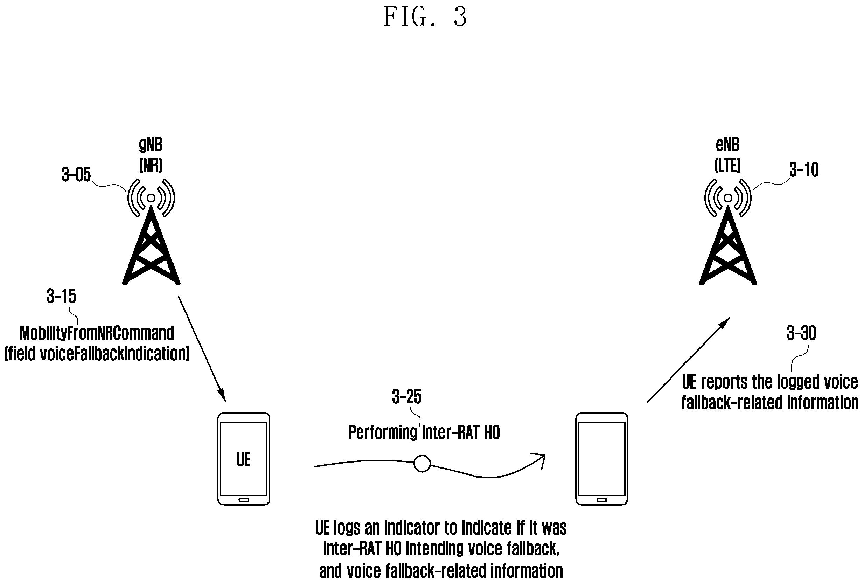

FIG. 3 is a diagram illustrating an operation of recording voice fallback-related information in inter-RAT handover according to an embodiment of the disclosure.

In order to optimize a voice fallback operation, the disclosure proposes a method for the UE to record and/or report information related thereto. The recorded information may be reported to the network through a radio link failure (RLF) report, a connection establishment (/resume) failure (CEF) report, a successful HO report, or a Logged minimization of drive test (MDT) report.

For example, a UE 3-20 may receive a message (e.g., MobilityFromNRCommand message) including an indicator (e.g., voiceFallbackIndication) indicating the voice fallback from a base station 3-05 (3-15), and if predetermined conditions are satisfied, predetermined information may be recorded (3-25). The information recorded in this way may be reported to the base station 3-10 through a predetermined procedure (3-30).

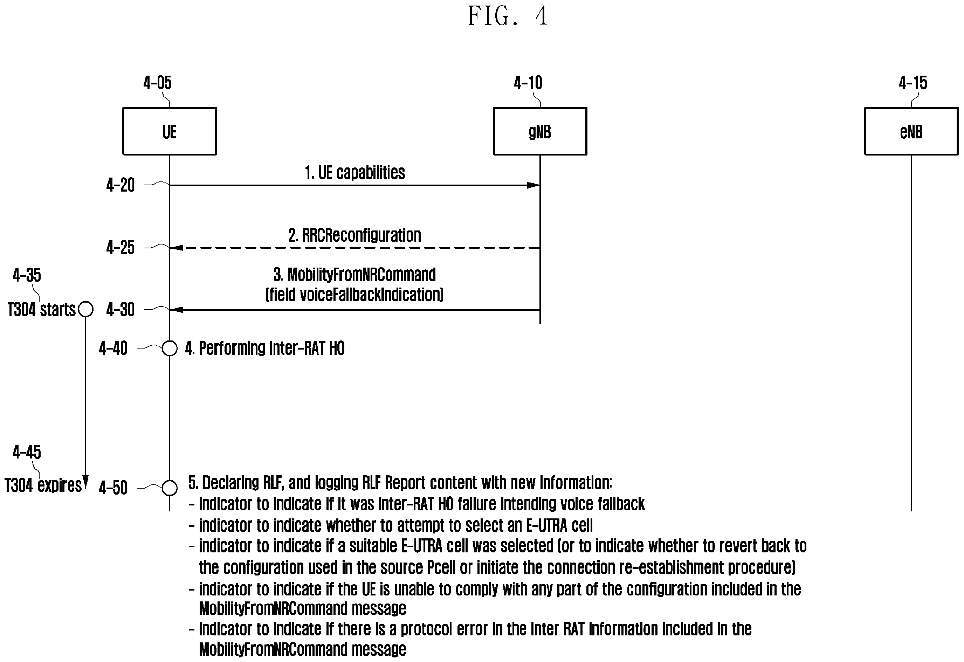

FIG. 4 is a flowchart of a process for reporting voice fallback-related information using an RLF report in inter-RAT handover according to an embodiment of the disclosure.

Some operation in FIG. 4 may be omitted in some cases, and two or more operations may be combined and performed as one operation.

If a connection failure or handover failure occurs according to predetermined conditions in the UE's connected mode state (RRC_CONNECTED state), the UE declares RLF and performs an operation to recover wireless connection again. When declaring the RLF, the UE may collect useful information and, after switching back to the connected mode, report the information to the network. This is called an RLF report. The network that has received the information may utilize the information for network optimization.

The embodiment describes a method for recording voice fallback-related information in an RLF report and reporting the same after an inter-RAT handover failure. Hereinafter, a first base station may refer to a higher-generation base station (e.g., gNB) supporting NR and post-NR communication systems, and a second base station may refer to a base station (e.g., eNB) supporting a lower-generation communication system than the first base station.

A UE 4-05 may report its capability information to the first base station (e.g., gNB) 4-10 (4-20). The capability information may include an indicator indicating whether inter-RAT HO is supported and an indicator indicating that the UE may record and report voice fallback-related information.

The first base station may provide configuration information necessary to record and report voice fallback-related information to the UE through a predetermined RRC message (e.g., RRCReconfiguration), and/or configure measurement information reporting necessary to determine inter-RAT HO (4-25). The first base station may transmit a message (e.g., MobilityFromNRCommand message) including an indicator (e.g., voiceFallbackIndication) indicating voice fallback to the UE (4-30).

The UE that has received the message may apply a T304 value included in the message, drive a T304 timer (4-35), and perform inter-RAT HO according to the inter-RAT HO configuration information included in the message (4-40). That is, HO may be performed from the first base station (e.g., gNB) to the second base station (e.g., eNB). If the inter-RAT HO is not successfully completed until the T304 timer expires (4-45), the UE may declare RLF due to handover failure and store the previously defined RLF report content (4-50).

In case that the inter-RAT HO is triggered according to a message (e.g., MobilityFromNRCommand message) including an indicator (e.g., voiceFallbackIndication) indicating voice fallback, the UE may additionally record at least one of the following predetermined indicator information as the content recorded in the RLF report.
- Indicator to indicate if it was inter-RAT HO failure intending voice fallback (indicator to indicate if it was inter-RAT HO failure intending voice fallback), or
- Indicator to indicate whether to attempt to select an E-UTRA cell (indicator to indicate whether to attempt to select an E-UTRA cell)

In case that the inter-RAT HO is triggered according to a message (e.g., MobilityFromNRCommand message) including an indicator (e.g., voiceFallbackIndication) indicating voice fallback, the UE performs an operation of searching a suitable E-UTRA cell (e.g., LTE cell). In this case, indicator information indicating whether the suitable E-UTRA cell has been found may be additionally recorded as the content recorded in the RLF report. For example, the UE may additionally record the following indicator information.
- Indicator to indicate if a suitable E-UTRA cell was selected (indicator to indicate if a suitable E-UTRA cell was selected).

If the UE does not find a suitable E-UTRA cell, the UE applies the configuration information used in the NR source PCell and performs a re-establishment operation. Accordingly, indicator information indicating this operation may be included in the content recorded as the RLF report. For example, the UE may additionally record at least one of the following indicator information.
- Indicator to indicate whether to revert back to the configuration used in the source Pcell (indicator to indicate whether to revert back to the configuration used in the source Pcell), or
- Indicator to indicate whether to initiate the connection re-establishment procedure (indicator to indicate whether to initiate the connection re-establishment procedure).

In addition, in case that the inter-RAT HO is triggered according to a message (e.g., MobilityFromNRCommand message) that does not include an indicator (e.g., voiceFallbackIndication) indicating voice fallback, at least one of the following indicator information may be included as the content recorded in the RLF report.
- Indicator to indicate if the UE is unable to comply with any part of the configuration included in the MobilityFromNRCommand message (indicator to indicate if the UE is unable to comply with any part of the configuration included in the MobilityFromNRCommand message), or
- Indicator to indicate if there is a protocol error in the inter RAT information included in the MobilityFromNRCommand message (indicator to indicate if there is a protocol error in the inter RAT information included in the MobilityFromNRCommand message).

The RLF report content including the new indicator information described above may be reported to the cell after the UE is successfully connected to the NR cell (or LTE cell). The cell that has received the information may forward the information to the source base station or target base station that has triggered the inter-RAT HO. The source or target base station that has received the information may use the information to optimize inter-RAT HO for voice fallback. The information may be transmitted to the mobile communication service provider's server in addition to the base station and used by the mobile communication service provider to optimize the network.

In another embodiment, the UE may indicate to the base station whether the UE stores the new indicator information through a separate availability indicator for the new indicator information, and report the availability indicator to the base station using an IE different from the RLF Report IE in the UEInformationResponse message.

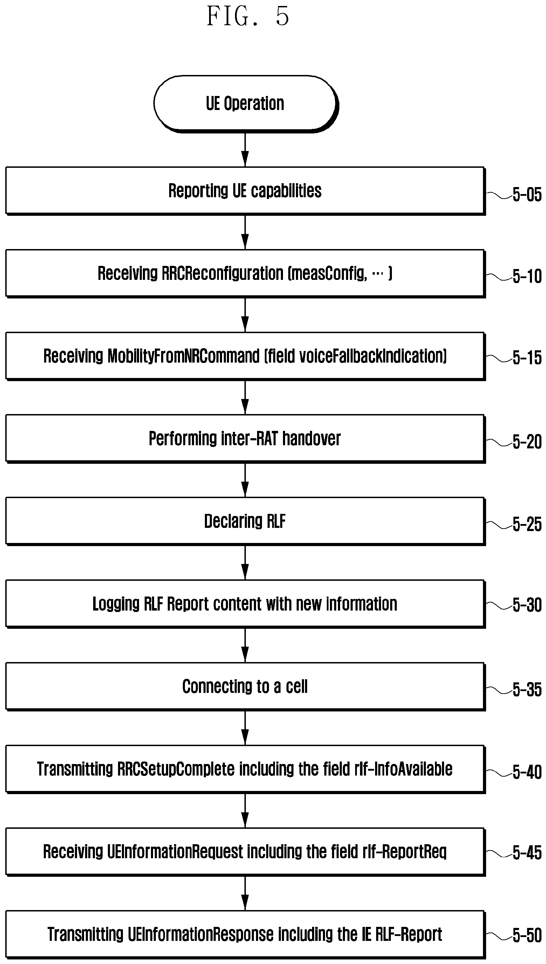

FIG. 5 is a flowchart of the operation of the UE reporting voice fallback-related information using an RLF report in inter-RAT handover according to an embodiment of the disclosure.

Hereinafter, a first base station may refer to a higher-generation base station (e.g., gNB) supporting NR and post-NR communication systems, and a second base station may refer to a base station (e.g., eNB) supporting a lower-generation communication system than the first base station. Some operations in FIG. 5 may be omitted in some cases, and two or more operations may be combined and performed as one operation.

In operation 5-05, the UE may report its capability information to the first base station (e.g., gNB). The capability information may include an indicator indicating whether inter-RAT HO is supported and an indicator indicating that the UE may record and report voice fallback-related information.

In operation 5-10, the UE may be provided with the configuration information necessary to record and report voice fallback-related information and/or the information that configures measurement information reporting necessary to determine inter-RAT HO, from the first base station, through a predetermined RRC message (e.g., RRCReconfiguration).

In operation 5-15, the UE may receive a message (e.g., MobilityFromNRCommand message) including an indicator (e.g., voiceFallbackIndication) indicating voice fallback from the first base station.

In operation 5-20, the UE may apply the T304 value included in the message, drive the T304 timer, and perform inter-RAT HO according to the inter-RAT HO configuration information included in the message. For example, HO may be performed from the first base station (e.g., gNB) to the second base station (e.g., eNB).

In operation 5-25, if the inter-RAT HO is not successfully completed until the T304 timer expires, the UE may declare RLF due to the failure of the inter-RAT HO.

In operation 5-30, the UE may store conventionally defined RLF report content. In addition, in case that the inter-RAT HO is triggered according to a message (e.g., MobilityFromNRCommand message) including an indicator (e.g., voiceFallbackIndication) indicating voice fallback, the UE may include at least one of the following indicators in the RLF report content.
- Indicator to indicate if it was inter-RAT HO failure intending voice fallback (indicator to indicate if it was inter-RAT HO failure intending voice fallback), or
- Indicator to indicate whether to attempt to select an E-UTRA cell (indicator to indicate whether to attempt to select an E-UTRA cell).

In addition, after the inter-RAT HO for voice fallback fails, the UE may include at least one of the following indicators in the RLF report content according to whether the UE finds one suitable E-UTRA cell.
- Indicator to indicate if a suitable E-UTRA cell was selected (indicator to indicate if a suitable E-UTRA cell was selected),
- Indicator to indicate whether to revert back to the configuration used in the source Pcell (indicator to indicate whether to revert back to the configuration used in the source Pcell), or
- Indicator to indicate whether to initiate the connection re-establishment procedure (indicator to indicate whether to initiate the connection re-establishment procedure).

In operation 5-35, after the failure, the UE may successfully connect to one cell (e.g., NR cell) through an establishment or resume process.

In operation 5-40, the UE may include an indicator (e.g., rlf-InfoAvailable) indicating that the RLF report information including the new indicator information is recorded in an RRCSetupComplete message or RRRCesumeComplete message, and transmit the same to the cell. Alternatively, a separate new indicator indicating that the new indicator information proposed by the disclosure is recorded may be included and transmitted.

In operation 5-45, the UE may receive a request message (e.g., UEInformationRequest message) including an indicator (e.g., rlf-ReportReq) requesting to report the RLF report information from the cell.

In operation 5-50, the UE may transmit a response message (e.g., UEInformationResponse message) including the recorded RLF report information to the cell.

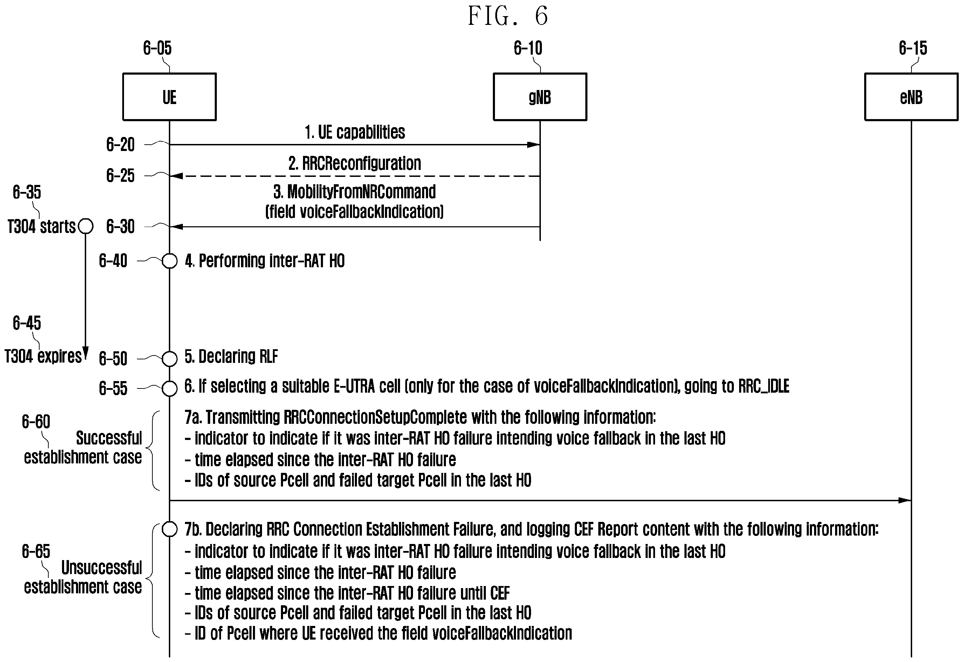

FIG. 6 is a flowchart of a process for reporting voice fallback-related information using a connection establishment(/Resume) failure (CEF) report in inter-RAT handover according to an embodiment of the disclosure.

Some operation in FIG. 6 may be omitted in some cases, and two or more operations may be combined and performed as one operation.

To switch from an idle mode (RRC_IDLE) or inactive mode (RRC_INACTIVE) to a connected mode, the UE may perform an establishment or resume operation. In this case, when a switch failure occurs according to a predetermined condition (e.g., T300 timer or T319 timer expiration), the UE may declare CEF. When declaring the CEF, the UE may collect useful information and, after switching back to the connected mode, report the information to the network. This is called a CEF report. The network that has received the information may utilize the information for network optimization.

The embodiment describes a method for reporting voice fallback-related information through a predetermined RRC message (e.g., RRCConnectionSetupComplete) after an inter-RAT handover failure, or recording and reporting the voice fallback-related information in a CEF report. Hereinafter, a first base station may refer to a higher-generation base station (e.g., gNB) supporting NR and post-NR communication systems, and a second base station may refer to a base station (e.g., eNB) supporting a lower-generation communication system than the first base station.

A UE 6-05 may report its capability information to the first base station (e.g., gNB) 6-10 (6-20). The capability information may include an indicator indicating whether inter-RAT HO is supported and an indicator indicating that the UE may record and report voice fallback-related information.

The first base station may provide configuration information necessary to record and report voice fallback-related information to the UE through a predetermined RRC message (e.g., RRCReconfiguration), and/or configure measurement information reporting necessary to determine inter-RAT HO (6-25).

The first base station may transmit a message (e.g., MobilityFromNRCommand message) including an indicator (e.g., voiceFallbackIndication) indicating voice fallback to the UE (6-30).

The UE that has received the message may apply a T304 value included in the message, drive a T304 timer (6-35), and perform inter-RAT HO according to the inter-RAT HO configuration information included in the message (6-40). For example, HO may be performed from the first base station (e.g., gNB) to the second base station (e.g., eNB). If the inter-RAT HO is not successfully completed until the T304 timer expires (6-45), the UE may declare RLF due to handover failure and store the previously defined RLF report content (6-50).

In case that the inter-RAT HO is triggered according to a message (e.g., MobilityFromNRCommand message) including an indicator (e.g., voiceFallbackIndication) indicating voice fallback, the UE may perform an operation to search for a suitable E-UTRA cell (LTE cell). If the UE finds one suitable E-UTRA cell, the UE may switch to the idle mode (6-55). The UE that has switched to the idle mode may perform an establishment operation to connect to the suitable E-UTRA cell. The UE may transmit an RRCConnectionRequest message to the E-UTRA cell and drive the T300 timer.

If an RRCConnectionSetup message is received from the cell before the timer (e.g., T300 timer) expires, it may be considered that the UE has successfully connected to the cell (6-60). Thereafter, the UE may transmit an RRCConnectionSetupComplete message to the cell. In this case, the UE may include at least one of the following indicator information in the RRCConnectionSetupComplete message and report the same to the cell.
- Indicator to indicate if it was inter-RAT HO failure intending voice fallback in the last HO and the current establishment was initiated by the failure (indicator to indicate if it was inter-RAT HO failure intending voice fallback in the last HO and the current establishment was initiated by the failure),
- Time elapsed since the inter-RAT HO failure (time elapsed since the inter-RAT HO failure),
- IDs of the source PCell and failed target PCell in the inter-RAT HO (Identities of the source PCell and failed target PCell in the inter-RAT HO),
- UE location when UE declared the inter-RAT HO failure (i.e., HOF, handover failure) (UE location when UE declared the inter-RAT HO failure (i.e. HOF, HandOver Failure)), or
- Cell measurement results when UE declared the inter-RAT HO failure (Cell measurement results when UE declared the inter-RAT HO failure).

Otherwise, if the RRCConnectionSetup message is not received from the cell before the timer expires, the UE may consider that it has not successfully connected to the cell (6-65). In this case, the UE may store predefined CEF report content. The UE may additionally record at least one of the following predetermined indicator information as content recorded in the CEF report.
- Indicator to indicate if it was inter-RAT HO failure intending voice fallback in the last HO and the current establishment was initiated by the failure (indicator to indicate if it was inter-RAT HO failure intending voice fallback in the last HO and the current establishment was initiated by the failure),
- Time elapsed since the inter-RAT HO failure (time elapsed since the inter-RAT HO failure),
- Time elapsed since the inter-RAT HO failure until CEF (time elapsed since the inter-RAT HO failure until CEF),
- IDs of the source PCell and failed target PCell in the inter-RAT HO (Identities of the source PCell and failed target PCell in the inter-RAT HO),
- UE location when UE declared the inter-RAT HO failure (i.e., HOF, HandOver Failure) (UE location when UE declared the inter-RAT HO failure (i.e. HOF, HandOver Failure)),
- Cell measurement results when UE declared the inter-RAT HO failure (Cell measurement results when UE declared the inter-RAT HO failure), or
- IDs of PCell where UE received the field voiceFallbackIndication in last HO (Identities of PCell where UE received that the field voiceFallbackIndication in last HO).

After the UE is successfully connected to one cell (e.g., LTE cell or NR cell), the CEF report content including the new indicator information may be reported to the cell. The cell that has received the information may forward the information to the source base station or target base station that has triggered the inter-RAT HO. The source base station or target base station that has received the information may use the information to optimize inter-RAT HO for voice fallback. The information may be transmitted to the mobile communication service provider's server in addition to the base station and used by the mobile communication service provider to optimize the network.

In another embodiment, the UE may indicate to the base station whether the UE stores the new indicator information through a separate availability indicator for the new indicator information, and report the availability indicator to the base station using an IE different from the CEF Report IE in the UEInformationResponse message.

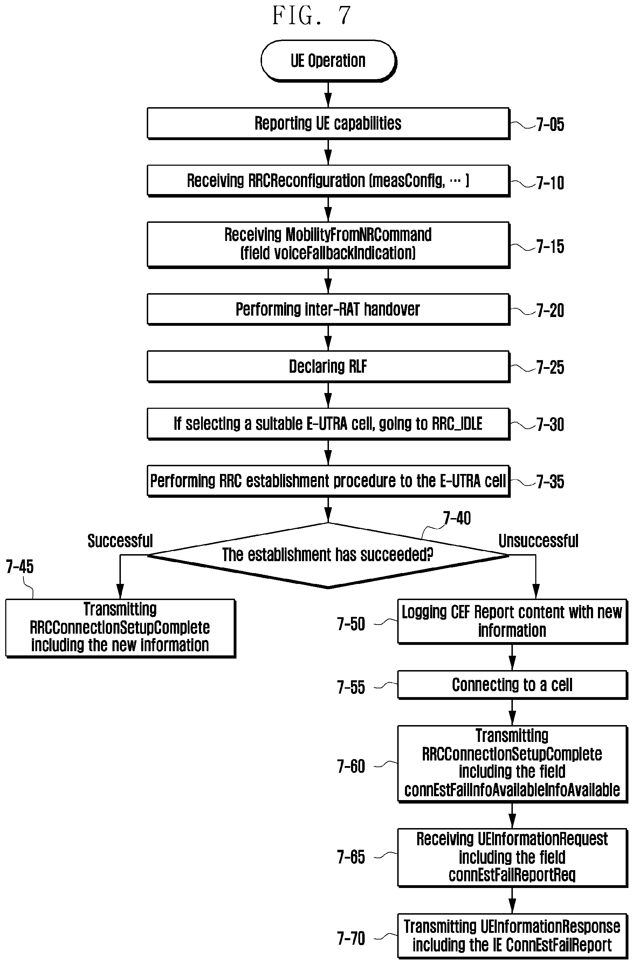

FIG. 7 is a flowchart of the operation of the UE reporting voice fallback-related information using a CEF report in inter-RAT handover according to an embodiment of the disclosure. Hereinafter, a first base station may refer to a higher-generation base station (e.g., gNB) supporting NR and post-NR communication systems, and a second base station may refer to a base station (e.g., eNB) supporting a lower-generation communication system than the first base station. Some operations in FIG. 7 may be omitted in some cases, and two or more operations may be combined and performed as one operation.

In operation 7-05, the UE may report its capability information to the first base station (e.g., gNB). The capability information may include an indicator indicating whether inter-RAT HO is supported and an indicator indicating that the UE may record and report voice fallback-related information.

In operation 7-10, the UE may be provided with the configuration information necessary to record and report voice fallback-related information and/or the information that configures measurement information reporting necessary to determine inter-RAT HO, from the first base station, through a predetermined RRC message (e.g., RRCReconfiguration).

In operation 7-15, the UE may receive a message (e.g., MobilityFromNRCommand message) including an indicator (e.g., voiceFallbackIndication) indicating voice fallback from the first base station.

In operation 7-20, the UE may apply the T304 value included in the message, drive the T304 timer, and perform inter-RAT HO according to the inter-RAT HO configuration information included in the message. For example, HO may be performed from the first base station (e.g., gNB) to the second base station (e.g., eNB).

In operation 7-25, if the inter-RAT HO is not successfully completed until the T304 timer expires, the UE may declare RLF due to the failure of the inter-RAT HO.

In operation 7-30, if the UE is triggered according to a message (e.g., MobilityFromNRCommand message) including an indicator (e.g., voiceFallbackIndication) indicating that the inter-RAT HO is voice fallback, the UE may perform an operation to find a suitable E-UTRA cell (e.g., LTE cell). If the UE finds one suitable E-UTRA cell, the UE may switch to the idle mode.

In operation 7-35, after switching to the idle mode, the UE may perform an establishment operation to connect to the suitable E-UTRA cell. The UE may transmit an RRCConnectionRequest message to the E-UTRA cell and drive the T300 timer.

In operation 7-40, the UE may determine whether it successfully receives the RRCConnectionSetup message from the cell before the T300 timer expires.

In operation 7-45, if the UE successfully receives the RRCConnectionSetup message before the timer expires, it may be considered that the UE has successfully connected to the cell. Thereafter, the UE may transmit an RRCConnectionSetupComplete message including at least one of the following indicator information to the cell.
- Indicator to indicate if it was inter-RAT HO failure intending voice fallback in the last HO and the current establishment was initiated by the failure (indicator to indicate if it was inter-RAT HO failure intending voice fallback in the last HO and the current establishment was initiated by the failure),
- Time elapsed since the inter-RAT HO failure (time elapsed since the inter-RAT HO failure),
- IDs of the source PCell and failed target PCell in the inter-RAT HO (Identities of the source PCell and failed target PCell in the inter-RAT HO),
- UE location when UE declared the inter-RAT HO failure (i.e., HOF, HandOver Failure)) UE location when UE declared the inter-RAT HO failure (i.e. HOF, HandOver Failure)), or
- Cell measurement results when UE declared the inter-RAT HO failure (Cell measurement results when UE declared the inter-RAT HO failure).

In operation 7-50, if the UE does not receive the RRCConnectionSetup message from the cell before the timer expires, it may be considered that the UE has not successfully connected to the cell. In this case, the UE may store predefined CEF report content. In addition, the UE may additionally record at least one of the following predetermined indicator information as content recorded in the CEF report.
- Indicator to indicate if it was inter-RAT HO failure intending voice fallback in the last HO and the current establishment was initiated by the failure (indicator to indicate if it was inter-RAT HO failure intending voice fallback in the last HO and the current establishment was initiated by the failure),
- Time elapsed since the inter-RAT HO failure (time elapsed since the inter-RAT HO failure),
- Time elapsed since the inter-RAT HO failure until CEF (time elapsed since the inter-RAT HO failure until CEF),
- IDs of the source PCell and failed target PCell in the inter-RAT HO (identities of the source PCell and failed target PCell in the inter-RAT HO),
- UE location when UE declared the inter-RAT HO failure (i.e., HOF, HandOver Failure) (UE location when UE declared the inter-RAT HO failure (i.e. HOF, HandOver Failure)),
- Cell measurement results when UE declared the inter-RAT HO failure (Cell measurement results when UE declared the inter-RAT HO failure), or
- IDs of PCell where UE received the field voiceFallbackIndication in last HO (Identities of PCell where UE received that the field voiceFallbackIndication in last HO).

In operation 7-55, after the failure, the UE may successfully connect to one cell (e.g., LTE cell) through an establishment or resume process.

In operation 7-60, the UE may include an indicator (e.g., connEstFailInfoAvailable) indicating that the CEF report information including the new indicator information is recorded in an RRCConnectionSetupComplete message or RRCConnectionResumeComplete message, and transmit the same to the cell. Alternatively, a separate new indicator indicating that the new indicator information proposed by the disclosure is recorded may be included and transmitted.

In operation 7-65, the UE may receive a request message (e.g., UEInformationRequest message) including an indicator (e.g., connEstFailReportReq) requesting to report the CEF report information from the cell.

In operation 7-70, the UE may transmit a response message (e.g., UEInformationResponse message) including the recorded CEF report information to the cell.

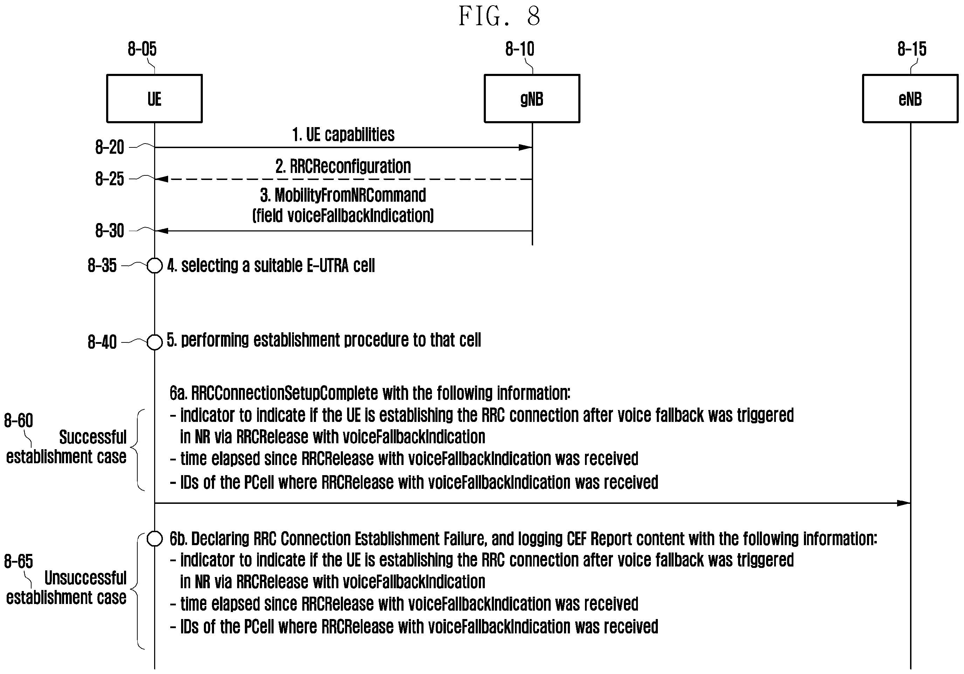

FIG. 8 is a flowchart of a process for reporting voice fallback-related information using a CEF report in inter-RAT Re-direction according to an embodiment of the disclosure.

Hereinafter, an example in which the first base station is an NR base station (e.g., gNB) is mainly described, but is not limited thereto, and it is apparent that the embodiment may also be applied to a Re-direction operation from a higher-generation base station supporting a post-NR communication system to a heterogeneous communication system. Some operations in FIG. 8 may be omitted in some cases, and two or more operations may be combined and performed as one operation.

The first base station (e.g., gNBO) switches the UE from the connected mode to the idle mode or inactive mode, and may provide related configuration information to the UE so that the UE may select a cell at the frequency of a heterogeneous system (e.g., LTE), that is, the inter-RAT carrier frequency. For example, the related configuration information may be included in an RRCRelease message.

In the embodiment, a method for reporting voice fallback-related information through a predetermined RRC message (e.g., RRCConnectionSetupComplete) after inter-RAT Redirection, or recording and reporting voice fallback-related information in a CEF report will be described.

A UE 8-05 may report its capability information to a first base station 8-10 (8-20). The capability information may include an indicator indicating whether inter-RAT Re-direction is supported and an indicator indicating that the UE may record and report voice fallback-related information. The first base station may provide configuration information necessary to record and report voice fallback-related information to the UE through a predetermined RRC message, and/or may configure reporting of measurement information reporting necessary to determine inter-RAT Re-direction (8-25). The first base station may transmit a message (e.g., RRCRelease message) including an indicator (e.g., voiceFallbackIndication) indicating voice fallback to the UE (8-30). The UE that has received the message may apply the Re-direction-related configuration information included in the message and perform a cell selection operation (8-35). According to the cell selection operation, the UE may search for one suitable cell and perform an establishment operation with the cell for EPS fallback (8-40). The UE may transmit an RRCConnectionRequest message to the E-UTRA cell and drive a T300 timer.

If the UE receives an RRCConnectionSetup message from the cell before the timer expires, it may be considered that the UE has successfully connected to the cell (8-45). Thereafter, the UE may transmit an RRCConnectionSetupComplete message to the cell. In this case, the UE may include at least one of the following indicator information in the RRCConnectionSetupComplete message and report the same to the cell.
- Indicator to indicate if the UE is establishing the RRC connection after voice fallback was triggered in NR via RRCRelease with voiceFallbackIndication (indicator to indicate if the UE is establishing the RRC connection after voice fallback was triggered in NR via RRCRelease with voiceFallbackIndication),
- Time elapsed since RRCRelease with voiceFallbackIndication was received (time elapsed since RRCRelease with voiceFallbackIndication was received), or
- IDs of the PCell where RRCRelease with voiceFallbackIndication was received (IDs of the PCell where RRCRelease with voiceFallbackIndication was received).

Otherwise, if the UE does not receive the RRCConnectionSetup message from the cell before the timer expires, it may be considered that the UE has not successfully connected to the cell (8-50). In this case, the UE may store predefined CEF report content. The UE may additionally record at least one of the following predetermined indicator information as content recorded in the CEF report.
- Indicator to indicate if the UE is establishing the RRC connection after voice fallback was triggered in NR via RRCRelease with voiceFallbackIndication (indicator to indicate if the UE is establishing the RRC connection after voice fallback was triggered in NR via RRCRelease with voiceFallbackIndication),
- Time elapsed since RRCRelease with voiceFallbackIndication was received (time elapsed since RRCRelease with voiceFallbackIndication was received), or
- IDs of the PCell where RRCRelease with voiceFallbackIndication was received (IDs of the PCell where RRCRelease with voiceFallbackIndication was received).

After the UE is successfully connected to one cell (e.g., LTE cell or NR cell), the CEF report content including the new indicator information may be reported to the cell. The cell that has received the information may forward the information to the source base station that has triggered the inter-RAT redirection. The source base station that has received the information may use the information to optimize inter-RAT Re-direction for voice fallback. The information may be transmitted to the mobile communication service provider's server in addition to the base station and used by the mobile communication service provider to optimize the network.

In another embodiment, the UE may indicate to the base station whether the UE stores the new indicator information through a separate availability indicator for the new indicator information, and report the availability indicator to the base station using an IE different from the CEF Report IE in the UEInformationResponse message.

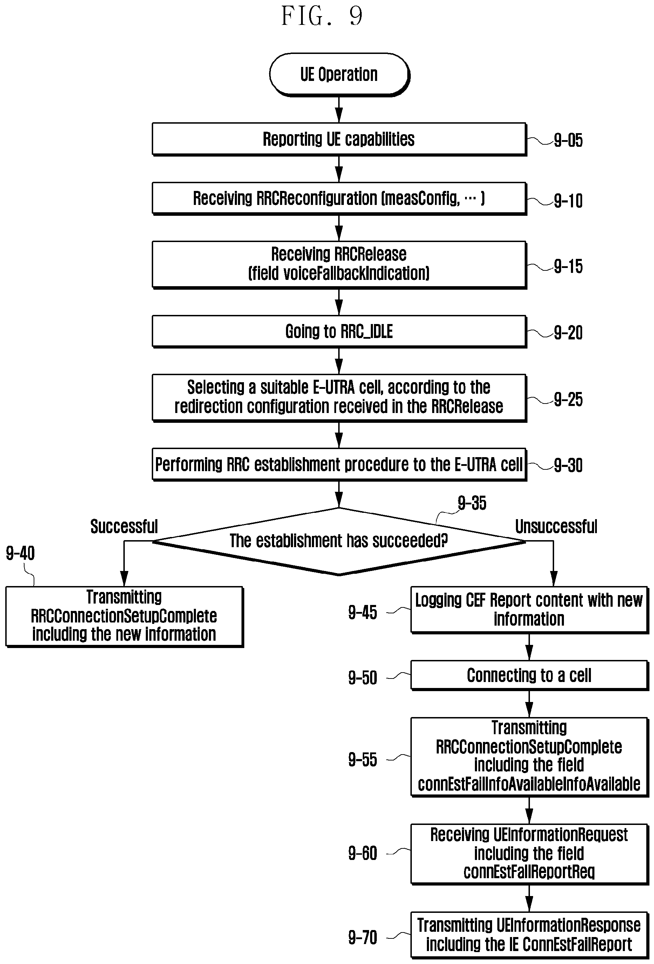

FIG. 9 is a flowchart of the operation of the UE reporting voice fallback-related information using a CEF report in inter-RAT Re-direction according to an embodiment of the disclosure.

Hereinafter, an example in which the first base station is an NR base station (e.g., gNB) is mainly described, but is not limited thereto, and it is apparent that the embodiment may also be applied to a Re-direction operation from a higher-generation base station supporting a post-NR communication system to a heterogeneous communication system. Some operations in FIG. 9 may be omitted in some cases, and two or more operations may be combined and performed as one operation.

In operation 9-05, the UE may report its capability information to the first base station (e.g., gNB). The capability information may include an indicator indicating whether inter-RAT Re-direction is supported and an indicator indicating that the UE may record and report voice fallback-related information.

In operation 9-10, the UE may be provided with the configuration information necessary to record and report voice fallback-related information and/or the information that configures measurement information reporting necessary to determine inter-RAT Re-direction, from the first base station, through a predetermined RRC message.

In operation 9-15, the UE may receive a message (e.g., RRCRelease message) including an indicator (e.g., voiceFallbackIndication) indicating voice fallback from the first base station.

In operation 9-20, after receiving the message, the UE may switch to the idle mode and perform a cell selection operation..

In operation 9-25, the UE may apply Re-direction-related configuration information to the message and select one suitable E-UTRA cell.

In operation 9-30, the UE may perform an establishment operation to connect to the suitable E-UTRA cell. The UE may transmit an RRCConnectionRequest message to the E-UTRA cell and drive a T300 timer.

In operation 9-35, the UE may determine whether it successfully receives the RRCConnectionSetup message from the cell before the T300 timer expires.

In operation 9-40, if the UE successfully receives the RRCConnectionSetup message before the timer expires, it may be considered that the UE has successfully connected to the cell. Thereafter, the UE may transmit an RRCConnectionSetupComplete message including at least one of the following indicator information to the cell.
- Indicator to indicate if the UE is establishing the RRC connection after voice fallback was triggered in NR via RRCRelease with voiceFallbackIndication (indicator to indicate if the UE is establishing the RRC connection after voice fallback was triggered in NR via RRCRelease with voiceFallbackIndication),
- Time elapsed since RRCRelease with voiceFallbackIndication was received (time elapsed since RRCRelease with voiceFallbackIndication was received), or
- IDs of the PCell where RRCRelease with voiceFallbackIndication was received (IDs of the PCell where RRCRelease with voiceFallbackIndication was received).

In operation 9-45, if the UE does not receive the RRCConnectionSetup message from the cell before the timer expires, it may be considered that the UE has not successfully connected to the cell. In this case, the UE may store predefined CEF report content. In addition, the UE may additionally record at least one of the following predetermined indicator information as content recorded in the CEF report.
- Indicator to indicate if the UE is establishing the RRC connection after voice fallback was triggered in NR via RRCRelease with voiceFallbackIndication (indicator to indicate if the UE is establishing the RRC connection after voice fallback was triggered in NR via RRCRelease with voiceFallbackIndication),
- Time elapsed since RRCRelease with voiceFallbackIndication was received (time elapsed since RRCRelease with voiceFallbackIndication was received), or
- IDs of the PCell where RRCRelease with voiceFallbackIndication was received (IDs of the PCell where RRCRelease with voiceFallbackIndication was received).

In operation 9-50, after the failure, the UE may successfully connect to one cell (e.g., LTE cell) through an establishment or resume process.

In operation 9-55, the UE may include an indicator (e.g., connEstFailInfoAvailable) indicating that the CEF report information including the new indicator information is recorded in an RRCConnectionSetupComplete message or RRCConnectionResumeComplete message, and transmit the same to the cell. Alternatively, a separate new indicator indicating that the new indicator information proposed by the disclosure is recorded may be included and transmitted.

In operation 9-60, the UE may receive a request message (e.g., UEInformationRequest message) including an indicator (e.g., connEstFailReportReq) requesting to report the CEF report information from the cell.

In operation 9-65, the UE may transmit a response message (e.g., UEInformationResponse message) including the recorded CEF report information to the cell.

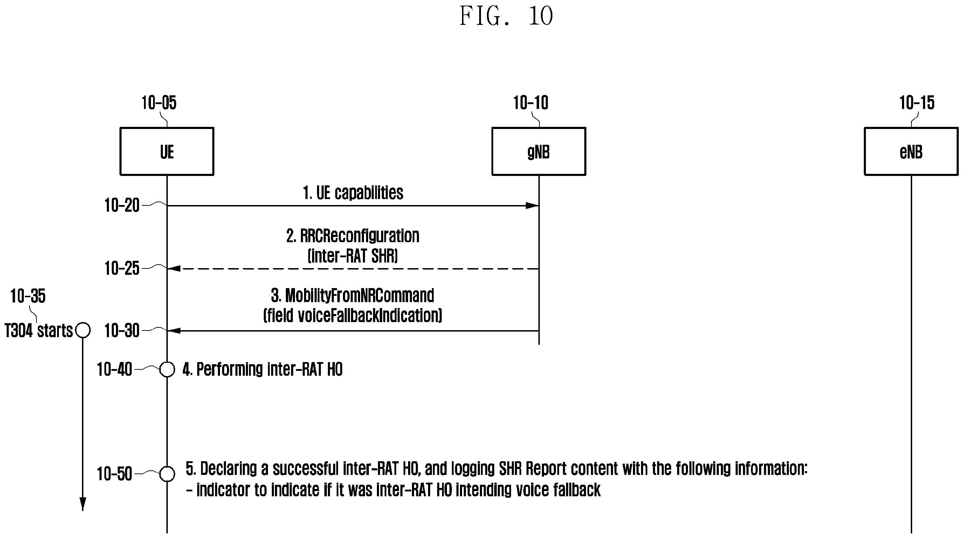

FIG. 10 is a flowchart of a process for reporting voice fallback-related information using a successful HO report (SHR) in inter-RAT handover according to an embodiment of the disclosure.

Some operations in FIG. 10 may be omitted in some cases, and two or more operations may be combined and performed as one operation.

SHR is a technology in which the UE collects and reports useful information with respect to a successfully completed handover. The base station may configure the UE to record related information collected at a predetermined point in time for a handover operation that satisfies predetermined conditions and is successfully completed. The UE that has stored the information may report the information when connected to a predetermined cell.

In the embodiment, a method for recording and reporting voice fallback-related information to the SHR for a successfully completed inter-RAT handover will be described. Hereinafter, a first base station may refer to a higher-generation base station (e.g., gNB) supporting NR and post-NR communication systems, and a second base station may refer to a base station (e.g., eNB) supporting a lower-generation communication system than the first base station.

A UE 10-05 may report its capability information to the first base station (e.g., gNB) 10-10 (10-20). The capability information may include an indicator indicating whether inter-RAT HO is supported and an indicator indicating that the UE may record and report voice fallback-related information. The first base station may provide configuration information necessary to record and report voice fallback-related information to the UE through a predetermined RRC message, and/or may configure reporting of measurement information reporting necessary to determine inter-RAT HO (10-25). In addition, the configuration information necessary to perform SHR may be provided to the UE. The first base station may transmit a message (e.g., MobilityFromNRCommand message) including an indicator (e.g., voiceFallbackIndication) indicating voice fallback to the UE (10-30). The UE that has received the message may apply the T304 value included in the message, drive a T304 timer (10-35), and perform inter-RAT HO according to the inter-RAT HO configuration information included in the message (10-40). For example, HO may be performed from the first base station (e.g., gNB) to the second base station (e.g., eNB). If the inter-RAT HO is successfully completed before the T304 timer expires, the UE may store conventionally defined SHR content in case that a predetermined condition is satisfied (10-45).

In case that the inter-RAT HO is triggered according to a message (e.g., MobilityFromNRCommand message) including an indicator (e.g., voiceFallbackIndication) indicating voice fallback, the UE may additionally record the following predetermined indicator information to the content recorded in the SHR report.
- Indicator to indicate if it was inter-RAT HO intending voice fallback (indicator to indicate if it was inter-RAT HO intending voice fallback)

The SHR content including the new indicator information may be reported to one cell (e.g., LTE cell or NR cell) connected to the UE. The cell that has received the information may forward the information to the source base station or target base station that has triggered the inter-RAT HO. The source or target base station that has received the information may use the information to optimize inter-RAT HO for voice fallback. The information may be transmitted to the mobile communication service provider's server in addition to the base station and used by the mobile communication service provider to optimize the network.

In another embodiment, the UE may indicate to the base station whether the UE stores the new indicator information through a separate availability indicator for the new indicator information, and report the availability indicator to the base station using an IE different from the SHR IE in the UEInformationResponse message.

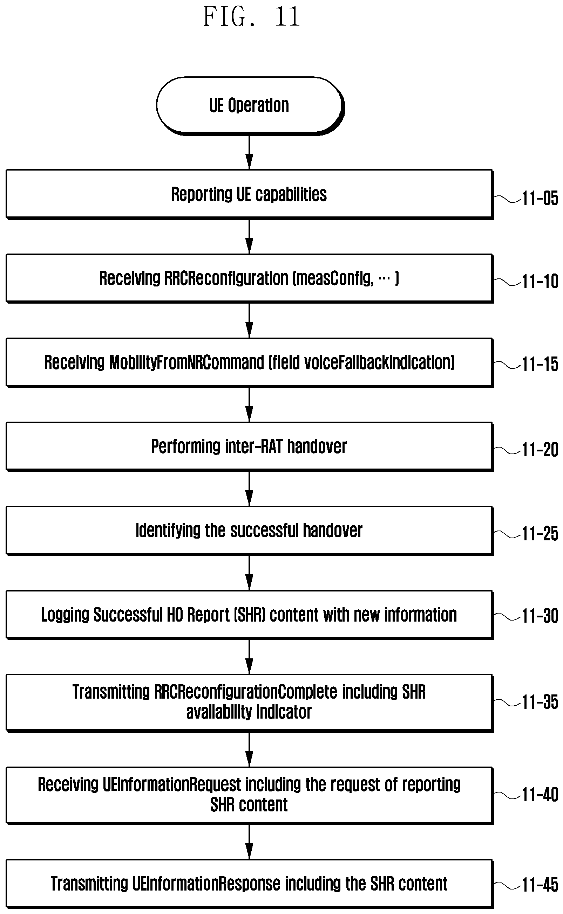

FIG. 11 is a flowchart of an operation of a UE reporting voice fallback-related information using SHR in inter-RAT handover according to an embodiment of the disclosure. Hereinafter, a first base station may refer to a higher-generation base station (e.g., gNB) supporting NR and post-NR communication systems, and a second base station may refer to a base station (e.g., eNB) supporting a lower-generation communication system than the first base station. Some operations in FIG. 11 may be omitted in some cases, and two or more operations may be combined and performed as one operation.

In operation 11-05, the UE may report its capability information to the first base station (e.g., gNB). The capability information may include an indicator indicating whether inter-RAT HO and SHR are supported and an indicator indicating that the UE may record and report voice fallback-related information.

In operation 11-10, the UE may be provided with the configuration information necessary to perform SHR, the configuration information necessary to record and report voice fallback-related information, and/or the measurement information reporting necessary to determine inter-RAT HO, from the base station, through a predetermined RRC message.

In operation 11-15, the UE may receive a message (e.g., MobilityFromNRCommand message) including an indicator (e.g., voiceFallbackIndication) indicating voice fallback from the base station.

In operation 11-20, the UE may apply the T304 value included in the message, drive a T304 timer, and perform inter-RAT HO according to the inter-RAT HO configuration information included in the message. For example, HO may be performed from the first base station (e.g., gNB) to the second base station (e.g., eNB).

In operation 11-25, the UE may successfully complete the inter-RAT HO until the T304 timer expires.

In operation 11-30, the UE may store conventionally defined SHR content, and additionally include the following indicator information in the SHR content in case that the UE is triggered according to a message (e.g., MobilityFromNRCommand message) including an indicator (e.g., voiceFallbackIndication) indicating that the inter-RAT HO is a voice fallback.
- Indicator to indicate if it was inter-RAT HO intending voice fallback (indicator to indicate if it was inter-RAT HO intending voice fallback)

In operation 11-35, the UE may include an indicator indicating that the SHR report information including the new indicator information is recorded in an RRCConnectionComplete message, and transmit the same to the cell. Alternatively, a separate new indicator indicating that the new indicator information proposed by the disclosure is recorded may be included and transmitted.

In operation 11-40, the UE may receive a request message (e.g., UEInformationRequest message) including an indicator requesting to report the SHR report information from the cell.

In operation 11-45, the UE may transmit a response message (e.g., UEInformationResponse message) including the recorded SHR information to the cell.

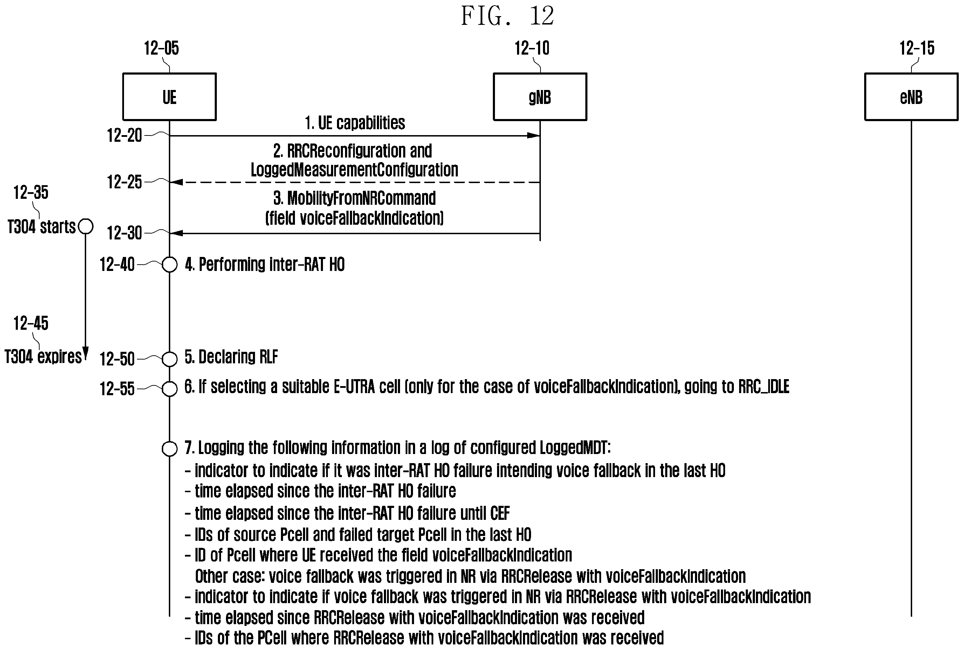

FIG. 12 is a flowchart of a process for reporting voice fallback-related information using a Logged MDT report in inter-RAT handover according to an embodiment of the disclosure.

Some operations in FIG. 12 may be omitted in some cases, and two or more operations may be combined and performed as one operation.

Logged MDT refers to an operation in which the UE collects cell measurement results, UE location, time information, etc. periodically or event-triggered periodically in an idle mode (RRC_IDLE) or inactive mode (RRC_INACTIVE), and then report it to a connected cell.

In the embodiment, a method for recording and reporting voice fallback-related information by performing a Logged MDT operation when the UE switches to the idle mode after an inter-RAT handover for voice fallback fails will be described. Hereinafter, a first base station may refer to a higher-generation base station (e.g., gNB) supporting NR and post-NR communication systems, and a second base station may refer to a base station (e.g., eNB) supporting a lower-generation communication system than the first base station.

A UE 12-05 may report its capability information to the first base station (e.g., gNB) 12-10 (12-20). The capability information may include an indicator indicating whether the Logged MDT operation and inter-RAT HO are supported and an indicator indicating that the UE may record and report voice fallback-related information. The first base station may provide configuration information necessary to record and report voice fallback-related information to the UE through a predetermined RRC message, and/or may configure reporting of measurement information reporting necessary to determine inter-RAT HO (12-25). In addition, the first base station may configure the Logged MDT operation through a LoggedMeasurementConfiguration message. The message may include information that configures the collection of the voice fallback-related information. The first base station may transmit a message (e.g., MobilityFromNRCommand message) including an indicator (e.g., voiceFallbackIndication) indicating voice fallback to the UE (12-30). The UE that has received the message may apply the T304 value included in the message, drive a T304 timer (12-35), and perform inter-RAT HO according to the inter-RAT HO configuration information included in the message (12-40). For example, HO may be performed from the first base station (e.g., gNB) to the second base station (e.g., eNB). If the inter-RAT HO is not successfully completed before the T304 timer expires (12-45), the UE may declare RLF due to the handover failure, and store conventionally defined RLF report content (12-50).

In case that the inter-RAT HO is triggered according to a message (e.g., MobilityFromNRCommand message) including an indicator (e.g., voiceFallbackIndication) indicating voice fallback, the UE may perform an operation to search for a suitable E-UTRA cell (e.g., LTE cell). If the UE finds one suitable E-UTRA cell, the UE may switch to the idle mode (12-55)

The UE that has switched to the idle mode may perform the Logged MDT operation. In this case, if the UE has received a message (e.g., MobilityFromNRCommand message) including an indicator (e.g., voiceFallbackIndication) indicating the voice fallback, and has not yet recorded related information, the UE may record at least one of the following voice fallback-related information in a VarLogMeasReport.
- Indicator to indicate if it was inter-RAT HO failure intending voice fallback in the last HO (indicator to indicate if it was inter-RAT HO failure intending voice fallback in the last HO),
- Time elapsed since the inter-RAT HO failure (time elapsed since the inter-RAT HO failure),
- Time elapsed since the inter-RAT HO failure until CEF (time elapsed since the inter-RAT HO failure until CEF),
- IDs of source Pcell and failed target Pcell in the last HO (IDs of source Pcell and failed target Pcell in the last HO), or
- ID of Pcell where UE received the field voiceFallbackIndication (ID of Pcell where UE received the field voiceFallbackIndication).

When the UE receives a message (e.g., RRCRelease message) including an indicator (e.g., voiceFallbackIndication) indicating voice fallback, the UE may switch to the idle mode. Therefore, during the idle mode, the UE may perform the Logged MDT operation. Therefore, even in this case, at least one of the following voice fallback-related information may be recorded in a VarLogMeasReport.
- Indicator to indicate if voice fallback was triggered in NR via RRCRelease with voiceFallbackIndication (indicator to indicate if voice fallback was triggered in NR via RRCRelease with voiceFallbackIndication),
- Time elapsed since RRCRelease with voiceFallbackIndication was received (time elapsed since RRCRelease with voiceFallbackIndication was received), or
- IDs of the PCell where RRCRelease with voiceFallbackIndication was received (IDs of the PCell where RRCRelease with voiceFallbackIndication was received).

After the UE is successfully connected to one cell (e.g., LTE cell or NR cell), the Logged MDT content including the new indicator information may be reported to the cell. The cell that has received the information may forward the information to the source base station or target base station that has triggered the inter-RAT HO or inter-RAT Re-direction. The source or target base station that has received the information may use the information to optimize the inter-RAT HO or inter-RAT Re-direction for voice fallback. The information may be transmitted to the mobile communication service provider's server in addition to the base station and used by the mobile communication service provider to optimize the network.

In another embodiment, the UE may indicate to the base station whether the UE stores the new indicator information through a separate availability indicator for the new indicator information, and report the availability indicator to the base station using an IE different from the logMeasInfoList IE in the UEInformationResponse message.

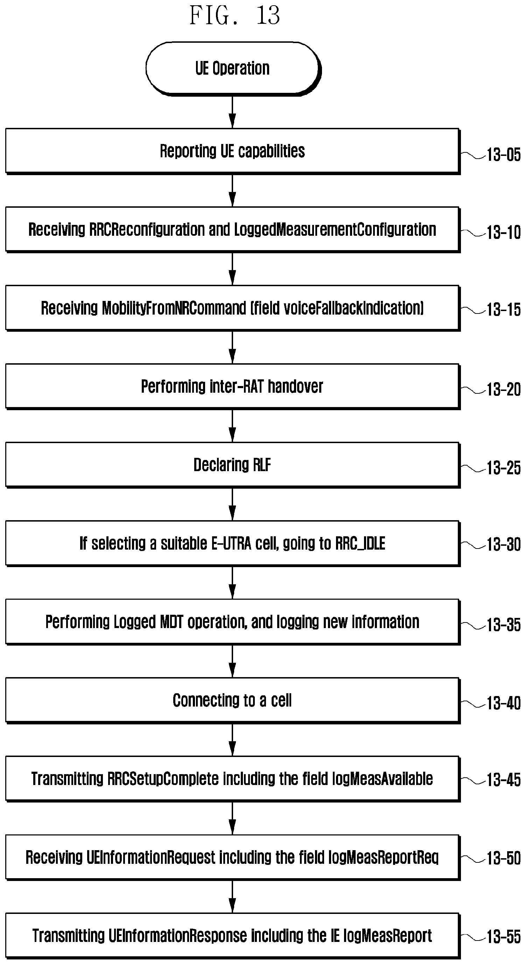

FIG. 13 is a flowchart of an operation of a UE reporting voice fallback-related information using a Logged MDT report in inter-RAT handover according to an embodiment of the disclosure. Hereinafter, a first base station may refer to a higher-generation base station (e.g., gNB) supporting NR and post-NR communication systems, and a second base station may refer to a base station (e.g., eNB) supporting a lower-generation communication system than the first base station. Some operations in FIG. 13 may be omitted in some cases, and two or more operations may be combined and performed as one operation.

In operation 13-05, the UE may report its capability information to the first base station (e.g., gNB). The capability information may include an indicator indicating whether the Logged MDT and inter-RAT HO are supported and an indicator indicating that the UE may record and report voice fallback-related information.

In operation 13-10, the UE may be provided with the configuration information necessary to record and report voice fallback-related information and/or the information that configures measurement information reporting necessary to determine inter-RAT HO, from the first base station, through a predetermined RRC message. In addition, the UE may receive Logged MDT operation configuration through the LoggedMeasurementConfiguration message received from the base station.

In operation 13-15, the UE may receive a message (e.g., MobilityFromNRCommand message) including an indicator (e.g., voiceFallbackIndication) indicating voice fallback from the first base station.

In operation 13-20, the UE may apply the T304 value included in the message, drive a T304 timer, and perform inter-RAT HO according to the inter-RAT HO configuration information included in the message. For example, HO may be performed from the first base station (e.g., gNB) to the second base station (e.g., eNB).

In operation 13-25, if the inter-RAT HO is not successfully completed until the T304 timer expires, the UE may declare RLF due to failure of the inter-RAT HO.

In operation 13-30, the UE may perform an operation for searching a suitable E-UTRA cell (e.g., LTE cell) in case that the UE is triggered according to a message (e.g., MobilityFromNRCommand message) including an indicator (e.g., voiceFallbackIndication) indicating that the inter-RAT HO is a voice fallback. If the UE finds one suitable E-UTRA cell, the UE may switch to the idle mode.

In operation 13-35, the UE may record at least one of the following voice fallback-related information in a VarLogMeasReport while the UE is in the idle mode.
- Indicator to indicate if it was inter-RAT HO failure intending voice fallback in the last HO (indicator to indicate if it was inter-RAT HO failure intending voice fallback in the last HO),
- Time elapsed since the inter-RAT HO failure (time elapsed since the inter-RAT HO failure),
- Time elapsed since the inter-RAT HO failure until CEF (time elapsed since the inter-RAT HO failure until CEF),
- IDs of source Pcell and failed target Pcell in the last HO (IDs of source Pcell and failed target Pcell in the last HO), or
- IDs of Pcell where UE received the field voiceFallbackIndication (ID of Pcell where UE received the field voiceFallbackIndication).

In operation 13-40, after the failure, the UE may successfully connect to one cell (e.g., NR cell) through an establishment or resume process.

In operation 13-45, the UE may include an indicator (e.g., logMeasInfoAvailable) indicating that the Logged MDT information including the new indicator information is recorded in an RRCSetupComplete or RRCResumeComplete message, and transmit the same to the cell. Alternatively, a separate new indicator indicating that the new indicator information proposed by the disclosure is recorded may be included and transmitted.

In operation 13-50, the UE may receive a request message (e.g., UEInformationRequest message) including an indicator (e.g., logMeassReportReq) requesting to report the Logged MDT information from the cell.

In operation 13-55, the UE may transmit a response message (e.g., UEInformationResponse message) including the recorded Logged MDT information to the cell.

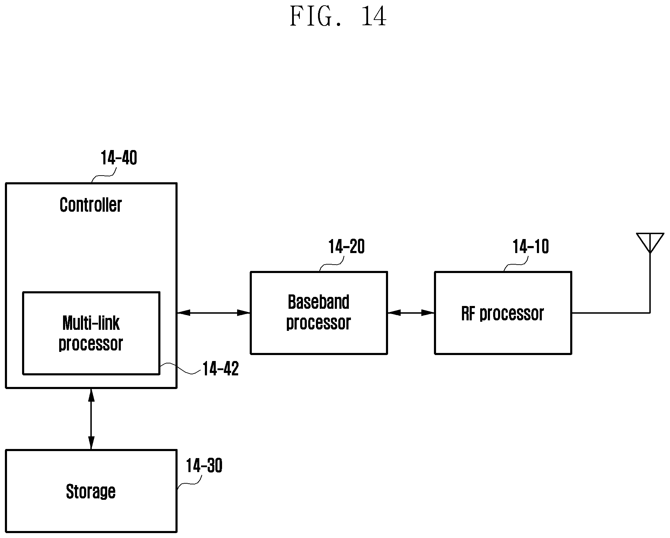

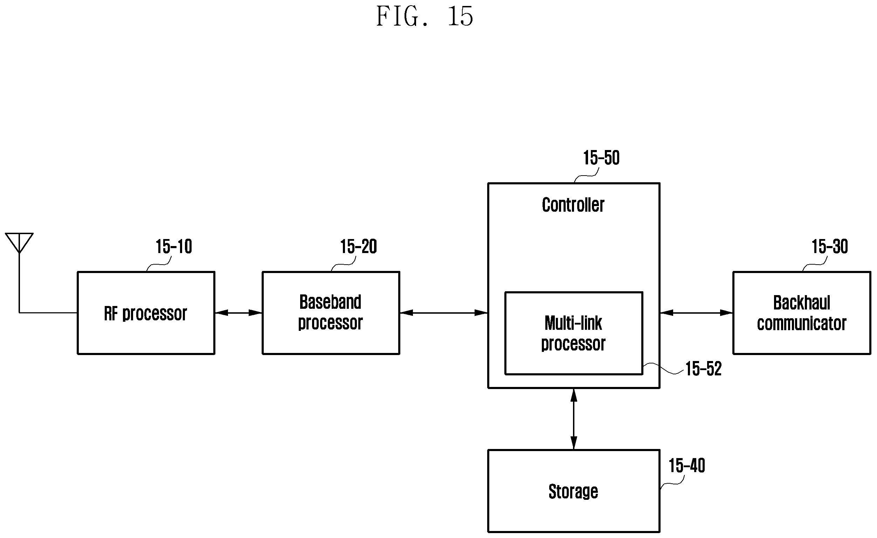

The above-described embodiments and/or methods may be performed independently from each other, or at least some operations may be combined and performed. In addition, the above-described embodiments and/or methods may be performed by the UE and base station of FIGS. 14 and 15.

FIG. 14 is a block diagram illustrating an internal structure of the UE to which the disclosure is applied.

With reference to the drawing, the UE may include a radio frequency (RF) processor 14-10, a baseband processor 14-20, a storage 14-30, and a controller 14-40.

The RF processor 14-10 performs functions for transmitting and receiving a signal through a wireless channel, such as band conversion, amplification, etc. of the signal. That is, the RF processor 14-10 up-converts a baseband signal provided from the baseband processor 14-20 into an RF band signal, transmits the RF band signal through an antenna, and down-converts an RF band signal received through the antenna into a baseband signal. For example, the RF processor 14-10 may include a transmission filter, a reception filter, an amplifier, a mixer, an oscillator, a digital-to-analog converter (DAC), an analog-to-digital converter (ADC), and the like. Although one antenna is illustrated in the drawing, the UE may also include a plurality of antennas. In addition, the RF processor 14-10 may include a plurality of RF chains. Further, the RF processor 14-10 may perform beamforming. For the beamforming, the RF processor 14-10 may adjust phases and magnitudes of respective signals transmitted and received through a plurality of antennas or antenna elements. The RF processor may also perform MIMO and may receive several layers when performing MIMO operation.

The baseband processor 14-20 performs conversion between a baseband signal and a bitstream according to physical layer standards of a system. For example, in data transmission, the baseband processor 14-20 may generate complex symbols by encoding and modulating a transmission bitstream. In data reception, the baseband processor 14-20 may also reconstruct a received bitstream by demodulating and decoding the baseband signal provided from the RF processor 14-10. For example, in case that orthogonal frequency division multiplexing (OFDM) scheme is used, in data transmission, the baseband processor 14-20 may generate complex symbols by encoding and modulating a transmission bitstream, map the complex symbols to subcarriers, and then, constitute OFDM symbols through inverse fast Fourier transform (IFFT) operation and cyclic prefix (CP) insertion. Also, in data reception, the baseband processor 14-20 divides the baseband signal provided from the RF processor 14-10 in the unit of an OFDM symbol, reconstructs the signals mapped to the subcarriers through fast Fourier transform (FFT) operation, and then, reconstructs the received bitstream through demodulation and decoding.

The baseband processor 14-20 and RF processor 14-10 may transmit and receive a signal as described above. Thus, the baseband processor 14-20 and RF processor 14-10 may also be called a transmitter, a receiver, a transceiver, or a communicator. Further, at least one of the baseband processor 14-20 and the RF processor 14-10 may include a plurality of communication modules for supporting a plurality of different radio access technologies. In addition, at least one of the baseband processor 14-20 and the RF processor 14-10 may include different communication modules for processing signals in different frequency bands. For example, the different radio access technologies may include a wireless LAN (e.g., IEEE 802.11), a cellular network (e.g., LTE), and the like. In addition, the different frequency bands may include a super high frequency (SHF, e.g., 2.NRHz, NRhz) band, and a millimeter wave (mm-wave, e.g., 60 GHz) band.

The storage 14-30 may store data such as a basic program for operations of the UE, an application program, configuration information, and the like. In particular, the storage 14-30 may store information related to a second connection node for performing wireless communication by using a second wireless connection technique. The storage 14-30 also provides the stored data at the request of the controller 14-40.

The controller 14-40 controls overall operations of the UE. For example, the controller 14-40 transmits and receives a signal through the baseband processor 14-20 and RF processor 14-10. The controller 14-40 also records and reads data from and in the storage 14-40. To this end, the controller 14-40 may include at least one processor. For example, the controller 14-40 may include a communication processor (CP) for performing control for communication and an application processor (AP) for controlling a higher layer such as an application program.

In addition, at least some of the above-described constitutions of the UE may be combined, or some constitutions may be omitted.

FIG. 15 is a block diagram illustrating a structure of a base station according to the disclosure.

With reference to the drawing, the base station may include an RF processor 15-10, a baseband processor 15-20, a backhaul communicator 15-30, a storage 15-40, and a controller 15-50.

The RF processor 15-10 performs functions for transmitting and receiving a signal through a wireless channel, such as band conversion, amplification, and etc. of the signal. That is, the RF processor 15-10 up-converts a baseband signal provided from the baseband processor 15-20 into an RF band signal, transmits the RF band signal through an antenna, and down-converts an RF band signal received through the antenna into a baseband signal. For example, the RF processor 15-10 may include a transmission filter, a reception filter, an amplifier, a mixer, an oscillator, a DAC, an ADC, and the like. Although one antenna is illustrated in the drawing the first connection node may include a plurality of antennas. The RF processor 15-10 may also include a plurality of RF chains. Further, the RF processor 15-10 may perform beamforming. For the beamforming, the RF processor 15-10 may adjust phases and magnitudes of respective signals transmitted and received through a plurality of antennas or antenna elements. The RF processor may perform downward MIMO operations by transmitting one or more layers.

The baseband processor 15-20 performs conversion between a baseband signal and a bitstream according to physical layer standards of a first wireless connection technique. For example, in data transmission, the baseband processor 15-20 generates complex symbols by encoding and modulating a transmission bitstream. In data reception, the baseband processor 15-20 also reconstructs a received bitstream by demodulating and decoding the baseband signal provided from the RF processor 15-10. For example, in case that the OFDM scheme is used, in data transmission, the baseband processor 15-20 generates complex symbols by encoding and modulating a transmission bitstream, maps the complex symbols to subcarriers, and then, constitutes OFDM symbols through IFFT operation and CP insertion. Also, in data reception, the baseband processor 15-20 divides the baseband signal provided from the RF processor 15-10 in the unit of an OFDM symbol, reconstructs the signals mapped to the subcarriers through FFT operation, and then, reconstructs the received bitstream through demodulation and decoding. The baseband processor 15-20 and RF processor 15-10 transmit and receive a signal as described above. Thus, the baseband processor 15-20 and RF processor 15-10 may also be called a transmitter, a receiver, a transceiver, a communicator, or a wireless communicator.

The backhaul communicator 15-30 provides an interface for performing communication with other nodes in a network. That is, the backhaul communicator 15-30 converts a bitstream transmitted from the main base station to another node, e.g., an auxiliary base station, a core network, etc., into a physical signal, and converts a physical signal received from another node into a bitstream.

The storage 15-40 stores data such as a basic program for operations of the main base station, an application program, configuration information, and the like. In particular, the storage 15-40 may store information about a bearer allocated to the connected UE, a measurement result reported from the connected UE, and the like. The storage 15-40 may also store information that is a criterion for determining whether to provide or stop multiple connections to the LTE. The storage 15-40 may also provide the stored data at the request of the controller 15-50.

The controller 15-50 controls overall operations of the main base station. For example, the controller 15-50 transmits and receives a signal through the baseband processor 15-20 and RF processor 15-10 or through the backhaul communicator 15-30. The controller 15-50 also records and reads data from and in the storage 15-40. To this end, the controller 15-50 may include at least one processor.

In addition, at least some of the above-described constitutions of the base station may be combined, or some constitutions may be omitted.

Meanwhile, the embodiments of the disclosure disclosed in the specification and drawings are merely provided as specific examples to easily explain the technical content of the disclosure and to facilitate understanding of the disclosure, and are not intended to limit the scope of the disclosure. In other words, it would be apparent to those skilled in the art that other modifications based on the technical idea of the disclosure can be implemented. In addition, each of the above embodiments can be operated in combination with each other as needed. For example, parts of all embodiments of the disclosure can be combined to operate the base station and UE.

## Claims

1. A method performed by a terminal in a wireless communication system, comprising:
receiving a message for a command of handover from a cell of a first radio access technology (RAT) to a target cell of a second RAT, the message including voice fallback indication (voicefallbackindication);
performing handover from the cell of the first RAT to the target cell of the second RAT based on the message; and
determining report content for a radio link failure in case that establishment of a connection to the target cell is not successful,
wherein the report content for the radio link failure includes information indicating that a failure of the handover is associated with voice fallback.

2. The method of claim 1, wherein the report content for the radio link failure further includes information indicating whether a suitable cell of the second RAT has been selected.

3. The method of claim 1, further comprising:
successfully establishing a connection with a third cell after failing to establish a connection to the target cell; and
transmitting the report content to the third cell.

4. The method of claim 1, further comprising reporting capability information of the terminal to the cell of the first RAT,
wherein the capability information includes information on whether the terminal supports inter-RAT handover and information on whether the terminal supports reporting of information related to the voice fallback.

5. The method of claim 1, further comprising performing a re-establishment procedure with the cell of the first RAT in case that a suitable cell of the second RAT is not found,
wherein the report content for the radio link failure further includes information associated with the re-establishment procedure.

6. A method performed by a base station of a first radio access technology (RAT) in a wireless communication system, comprising:
transmitting, to a terminal, a message for a command of handover from a cell of the first RAT to a target cell of a second RAT, handover from the cell of the first RAT to the target cell of the second RAT being performed based on the message; and
receiving report content for a radio link failure from a third cell in case that the handover fails,
wherein the message includes voice fallback indication (voicefallbackindication), and
wherein the report content for the radio link failure includes information indicating that a failure of the handover is associated with voice fallback.

7. The method of claim 6, wherein the report content for the radio link failure further includes information indicating whether a suitable cell of the second RAT has been selected.

8. The method of claim 6, further comprising receiving capability information of the UE from the UE,
wherein the capability information includes information on whether the terminal supports inter-RAT handover and information on whether the terminal is able to report information related to the voice fallback.

9. A terminal in a wireless communication system, comprising:
a transceiver; and
a processor functionally connected to the transceiver,
wherein the processor is configured to:
receive a message for a command of handover from a cell of a first radio access technology (RAT) to a target cell of a second RAT,
perform handover from the cell of the first RAT to the target cell of the second RAT based on the message; and
determine report content for a radio link failure in case that establishment of a connection to the target cell is not successful,
wherein the message includes voice fallback indication (voicefallbackindication), and
wherein the report content for the radio link failure includes information indicating that a failure of the handover is associated with voice fallback.

10. The terminal of claim 9, wherein the report content for the radio link failure further includes information indicating whether a suitable cell of the second RAT has been selected.

11. The terminal of claim 9, wherein the processor is configured to:
successfully establish a connection with a third cell after failing to establish a connection to the target cell, and
transmit the report content to the third cell.

12. The terminal of claim 9, wherein the processor is further configured to report capability information of the terminal to the cell of the first RAT,
wherein the capability information includes information on whether the terminal supports inter-RAT handover and information on whether the terminal supports reporting of information related to the voice fallback.

13. A base station in a wireless communication system, comprising:
a transceiver; and
a processor functionally connected to the transceiver,
wherein the processor is configured to:
transmit, to a terminal, a message for a command of handover from a cell of a first radio access technology (RAT) corresponding to the base station to a target cell of a second RAT, handover from the cell of the first RAT to the target cell of the second RAT being performed based on the message; and
receive report content for a radio link failure from a third cell in case that the handover fails,
wherein the message includes voice fallback indication (voicefallbackindication), and
wherein the report content for the radio link failure includes information indicating that a failure of the handover is associated with voice fallback.

14. The base station of claim 13, wherein the report content for the radio link failure further includes information indicating whether a suitable cell of the second RAT has been selected.

15. The base station of claim 13, wherein the processor is further configured to receive capability information of the UE from the UE,
wherein the capability information includes information on whether the terminal supports inter-RAT handover and information on whether the terminal is able to report information related to the voice fallback.
